# NEUE EUROPÄISCHE PATENTSCHRIFT

(11) **EP 0 773 136 B2**
(45) Veröffentlichungstag und Bekanntmachung des Hinweises auf die Entscheidung über den Einspruch: **14.11.2007**
(45) Hinweis auf die Patenterteilung: 05.12.2001
(21) Anmeldenummer: 96116394.6
(22) Anmeldetag: 12.10.1996
(51) Int. Cl.: B60P 1/44

(54) **Hubladebühne und Verfahren zur Steuerung derselben**
Tailgate lift and procedure for its control
Plate-forme de hayon et procédé pour sa commande

(30) Priorität: 09.11.1995 DE 19541791
(43) Veröffentlichungstag der Anmeldung: 14.05.1997
(73) Patentinhaber: MBB Liftsystems AG, 27777 Ganderkesee (DE)
(72) Erfinder: Knobling, Manfred, 27798 Hude (DE); Bley, Hubert, 49681 Garrel (DE)
(74) Vertreter: Möller, Friedrich

(56) Entgegenhaltungen:
- DE-A- 2 654 286
- DE-A- 3 345 589

## Beschreibung

Die Erfindung betrifft ein Verfahren zur Steuerung einer Hubladebühne gemäß dem Oberbegriff des Anspruchs 1. Des weiteren betrifft die Erfindung eine Hubladebühne nach dem Oberbegriff des Anspruchs 7.

Hubladebühnen der hier angesprochenen Art dienen dazu, das Be-und Entladen von Fahrzeugen mit insbesondere schweren Gegenständen zu erleichtern. Dazu verfügen die Hubladebühnen über eine vorzugsweise an der Rückseite eines Fahrzeugaufbaus schwenk-, heb- und senkbar angelenkte Ladeplattform.

In einer Ruhestellung, insbesondere während des fahrenden Fahrzeugs, ist die Ladeplattform angehoben und in eine vertikale Ebene hochgeschwenkt. Die Ladeplattform befindet sich dann hinter der Rückwand des Fahrzeugaufbaus. In einer Ladestellung zum Be- und Entladen des Fahrzeugs wird die Ladeplattform heruntergeschwenkt in eine horizontale oder nahezu horizontale Position. Durch ein Absenken der so heruntergeklappten Ladeplattform können die zu entladenen Gegenstände vom Niveau des Fahrzeugaufbaus auf ein demgegenüber niedrigeres Niveau, insbesondere ein Bodenniveau, gebracht werden. Umgekehrt wird die Ladeplattform zum Beladen des Fahrzeugs angehoben. Bei auf beispielsweise den Boden abgesenkter Ladeplattform weicht die Neigung derselben üblicherweise vom Bodenverlauf ab. Zum Angleichen an den Bodenverlauf wird die Ladeplattform nochmals derart verschwenkt, daß sie im wesentlichen vollflächig auf dem Boden aufliegt (Neigungsausgleich). Vor dem erneuten Anheben muß die Ladeplattform deshalb zunächst wieder etwas hochgeschwenkt werden.

Als problematisch hat sich in der Praxis die bedarfsgerechte Ausrichtung der Ladeplattform vor dem Absenken bzw. Anheben erwiesen. Diese Position muß von der Bedienungsperson jedesmal durch eine entsprechende Betätigung der jeweiligen Betätigungsorgane angefahren werden. Das erfordert auch bei geübtem Bedienungspersonal einen verhältnismäßig hohen Zeitaufwand. Es kann dabei auch vorkommen, daß die Neigung während des Hub-oder Senkvorgangs verändert werden muß, damit die auf der Ladeplattform stehenden Gegenstände nicht verrutschen.

Bekannt sind bereits Hubladebühnen, bei denen die Ladeplattform über Niveauschalter, insbesondere Quecksilberschalter, verfügt. Hiermit läßt sich die Ladeplattform automatisch in insbesondere eine horizontale Schwenkposition verschwenken. Diese Neigung ändert sich jedoch in Abhängigkeit von der jeweiligen Belastung der Ladeplattform. Aufgrund dessen ist es erforderlich, die Neigung individuell, nämlich in Abhängigkeit vom Gewicht der jeweils ein- oder auszuladenen Gegenstände zu verändern. Bei der bekannten Vorrichtung ist das nicht möglich, weil dazu der Neigungsschalter an der Ladeplattform in seiner Lage verändert werden müßte, was einen unverhältnismäßig hohen Aufwand erfordert.

Aus der gattüngsgemässen DE 33 45 589 A ist eine Hubladebühne bekannt, bei der eine Kollision einer Hinterkante des Fahrzeugaufbaus mit einer angrenzenden Kante der Ladeplattform vermieden werden soll. Dazu wird die Ladeplattform vor dem Verschwenken etwas abgesenkt. Diese abgesenkte Position ist bei der bekannten Hubladebühne in einer Steuerung speicherbar und wird beim Zurückschwenken der Ladeplattform automatisch wieder angesteuert. Bei dieser Hubladebühne tritt aber auch das Problem auf, dass die in eine vollständig auf dem Boden anliegende Position gebrachte Ladeplattform zum erneuten Anheben wieder manuell in eine etwa horizontale Position gebracht werden muss, damit auf der Ladeplattform befindliche Gegenstände nicht von dieser herunterrutschen können.

Ausgehend vom Vorstehenden liegt der Erfindung das Problem zugrunde, eine Hubladebühne und ein Verfahren zur Steuerung derselben zu schaffen, womit eine einfachere und sichere Bedienung gewährleistet ist.

Ein Verfahren zur Lösung des der Erfindung zugrundeliegenden Problems weist die Maßnahme des Anspruchs 1 auf. Dadurch, daß erfindungsgemäß mindestens eine Schwenkposition der Ladeplattform gespeichert und danach automatisch wieder angefahren wird, braucht die Bedienungsperson nur noch diese (einzige) Schwenkposition vorzugeben. Diese Schwenkposition wird im folgenden automatisch wieder angefahren. Die Ladeplattform "merkt" sich quasi die beispielsweise beim Verschenken aus der Ruhestellung vorgegebene Schwenkposition, indem diese beispielsweise beim Zurückschwenken von der an dem Bodenverlauf angepaßten Neigung der Ladeplattform in die zum Anheben erforderliche Neigung automatisch wieder eingestellt wird.

Vorzugsweise bleibt die durch ein erstes, manuell gesteuertes Verschwenken erreichte Position der Ladeplattform solange gespeichert, bis aufgrund der Betätigung entsprechender Betätigungsorgane diese Neigung verändert wird. Dadurch kann die jeweils gewünschte Neigung individuell eingestellt werden, und zwar ohne daß dazu irgendwelche mechanischen Veränderungen, beispielsweise Umstellung eines Quecksilberschalters, erforderlich sind.

Des weiteren ist vorgesehen, die voreingestellte Schwenkposition der Ladeplattform durch mindestens einen Sensor oder dergleichen zu detektieren und an eine elektronische Schaltung zu übermitteln. Diese Schaltung speichert die jeweils voreingestellte Position und steuert das automatische Anfahren derselben. Der voreingestellte Wert der Schwenkposition wird so lange gespeichert, bis eine Neueinstellung erfolgt. Es wird dann der neu eingestellte Wert abgespeichert, indem der alte Wert überschrieben wird.

Die elektronische Steuerung wird gemäß einer Weiterbildung des erfindungsgemäßen Verfahrens verwendet zur Abwicklung von Zusatzfunktionen, beispielsweise das Ein- und Ausfahren von Stützen, das Ein- und Ausschalten von Warnleuchten, das Ein-und Abschalten von Antriebsmotoren und/oder zur Überlastsicherung. Insbesondere können die Signale der Sensoren herangezogen werden, um entsprechende Zusatzfunktionen auszulösen, zu stoppen oder in sonstiger Weise zu steuern. Diese Steuerung der Zusatzfunktion kann somit in Abhängigkeit von bestimmten Schwenkpositionen der Ladeplattform erfolgen, wobei es nicht erforderlich ist, die ausgeschwenkte, etwa horizontale Schwenkposition der Ladeplattform zur Steuerung von Zusatzfunktionen heranzuziehen. Vielmehr kann jede beliebige Position der Ladeplattform zur Steuerung von Zusatzfunktionen herangezogen werden.

Eine Hubladebühne zur Lösung des der Erfindung zugrundeliegenden Problems weist die Merkmale des Anspruchs 7 auf. Durch mindestens einen Sensor an der Ladeplattform oder einem Lenker oder gegebenenfalls an beiden ist es möglich, in Abhängigkeit von bestimmten Positionen der Hubladebühne sich ändernde elektrische Signale zu erzeugen. Der Sensor erzeugt sich kontinuierlich, insbesondere proportional, mit der Änderung der Neigung der Ladeplattform ändernde Signale, die mit der jeweiligen Schwenkposition der Ladeplattform korrespondieren. Durch die Steuerung erfolgt eine Speicherung und Auswertung dieser Signale. Es lassen sich so bestimmte Signale, insbesondere solche, die voreingestellten, charakteristischen Positionen der Hubladebühne entsprechen, in der Schaltung abspeichern und zur Steuerung nachfolgender Bewegungsabläufe vielfältigster Art heranziehen. Die Speicherung eines eine bestimmte Schwenkposition der Ladeplattform entsprechenden Signals des Sensors führt dazu, daß diese Position automatisch wieder angefahren wird.

Ein vorzugsweise zweiter Sensor ist einem Lenker der Ladeplattform zugeordnet. Dieser Sensor dient dazu, das Ende des Absenkvorgangs zu detektieren, was dadurch geschieht, daß dann, wenn der Absenkvorgang beendet ist, weil die Ladeplattform auf dem Boden anliegt, sich das Signal über die Zeit nicht mehr ändert. Daraufhin kann das Anschwenken der Ladeplattform an die Neigung des Bodens gestartet werden. Bei diesem am Lenker angebrachten Sensor kann es sich um einen solchen handeln, der ein kontinuierliches Signal in jeder Stellung des Lenkers erzeugt. Denkbar ist es aber auch, einen Sensor zu verwenden, der nur ein Signal erzeugt, vorzugsweise ein Ein-Signal, das dann erzeugt wird, wenn der Absenkvorgang beendet ist.

Ein bevorzugtes Ausführungsbeispiel der Erfindung wird nachfolgend anhand der Zeichnung näher erläutert. In dieser zeigen:
- Fig. 1: eine an einem teilweise dargestellten Fahrzeugaufbau angebaute Hubladebühne in einer Ruhestellung,
- Fig. 2: die Hubladebühne in einer Darstellung gemäß der Fig. 1 mit abgeklappter Ladeplattform,
- Fig. 3: die Hubladebühne in einer Darstellung der Fig. 1 und 2 mit abgeklappter und abgesenkter Ladeplattform,
- Fig. 4: die Hubladebühne in einer Darstellung nach den Fig. 1 bis 3 bei abgeklappter, abgesenkter und an die Bodenneigung angepaßten Ladeplattform, und
- Fig. 5: eine Ansicht auf die Bedienfläche eines Bedienpults der Hubladebühne.

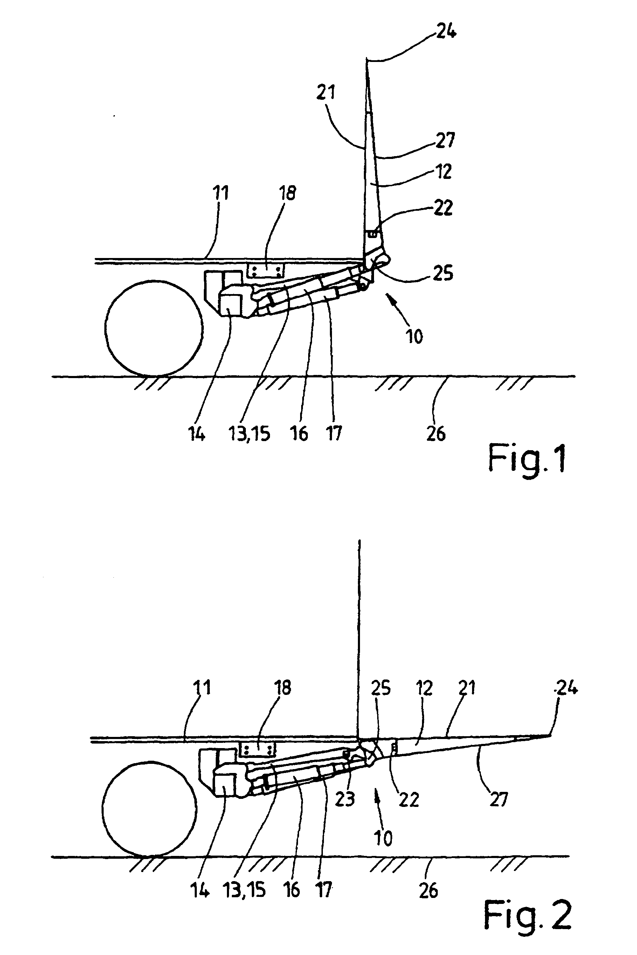

Die hier dargestellte Hubladebühne 10 ist an der Rückseite eines Fahrzeugaufbaus 11 eines teilweise dargestellten Fahrzeugs montiert. Die Hubladebühne 10 verfügt über eine ebene Ladeplattform 12, die über zwei Parallelogrammlenkerpaare 13 heb- und schwenkbar an einer starren Traverse 14 des Fahrzeugaufbaus 11 angelenkt ist. Jedes Parallelogrammlenkerpaar 13 verfügt über zwei Lenker, von denen in den Fig. 1 bis 4 ein oberer Lenker 15 des vorderen Parallelogrammlenkerpaares 13 erkennbar ist. Jedem Parallelogrammlenkerpaar 13 sind zwei Druckmittelzylinder 16 und 17 zugeordnet, von denen der (obere) Druckmittelzylinder 16 zum Schwenken der Ladeplattform 12 dient, während der untere Druckmittelzylinder 17 zum Anheben und Absenken der Ladeplattform 12 vorgesehen ist.

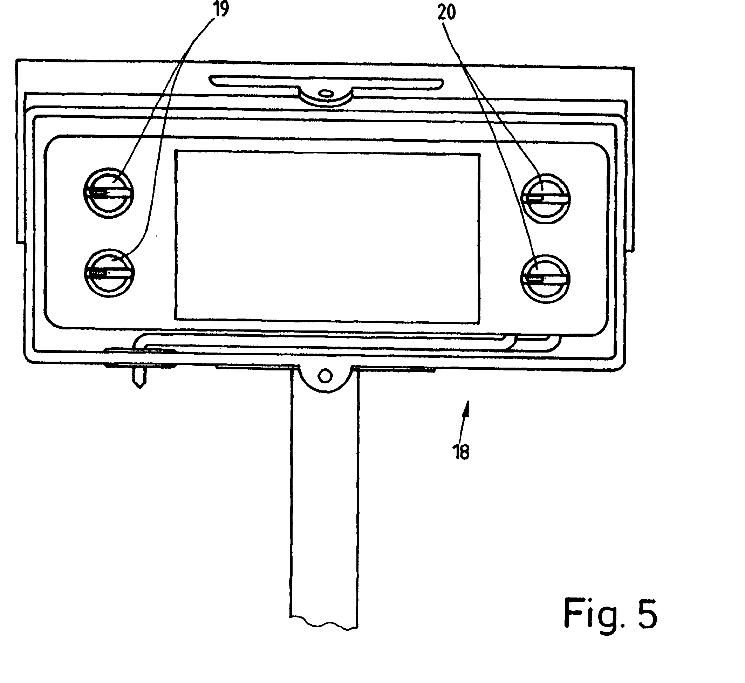

Zum Veschwenken, Heben und Senken der Ladeplattform 12 sind Druckmittelzylinder 16 und 17 mit einem Druckmittel, insbesondere Hydrauliköl, aus einem Druckmittelsystem versorgbar. Dieses Druckmittelsystem verfügt vorzugsweise über eine Druckmittelpumpe, die von einem Elektromotor antreibbar ist. Zur Betätigung des Schwenk-, Hebe- und Senkvorgangs der Ladeplattform 12 ist ein Bedienpult 18 vorgesehen, das im gezeigten Ausführungsbeispiel (Fig. 5) vier Bedienschalter 19 und 20 aufweist, die hier als Drehschalter ausgebildet sind. Die Bedienschalter 19 und 20 können aber auch Druckschalter oder dergleichen sein. Zwei Bedienschalter üben jeweils die gleiche Funktion aus. Sie müssen aufgrund entsprechender Unfallverhütungsvorschriften gemeinsam betätigt werden, um die gewünschte Funktion, nämlich das Verschwenken, Heben oder Senken der Ladeplattform 12 herbeizuführen. Mittels der Bedienschalter 19 und 20 ist das Hydrauliksystem derart zu betätigen, daß der Druckmittelzylinder 16 zum Verschwenken der Ladeplattform 12 ein- oder ausfährt oder die Druckmittelzylinder 17 zum Anheben oder Absenken der Ladeplattform 12 ein-oder ausfahren. Zusätzliche Bedienschalter, nämlich Fußschalter, können auf der Oberseite 21 der Ladeplattform 12 angeordnet sein.

Die erfindungsgemäße Hubladebühne 10 verfügt über einen Sensor 22 an der Ladeplattform 12 und einen weiteren Sensor 23 an einem Lenker eines der beiden Parallelogrammlenkerpaare 13. Beim hier gezeigten Ausführungsbeispiel verfügt der obere Lenker 15 des vorderen Parallelogrammlenkerpaars 13 über einen Sensor 23. Bei den Sensoren 22 und 23 handelt es sich vorzugsweise um gleichermaßen ausgebildete Mikrosensoren, die aufgrund ihrer geringen Baugröße an beliebigen Stellen des oberen Lenkers 15 oder der Ladeplattform 12 anbringbar sind. Die Sensoren 22, 23 liefern ein elektrisches Signal, das neigungsabhängig ist. Ändert sich die Neigung des oberen Lenkers 15 und/oder der Ladeplattform 12, ändert sich gleichzeitig die Neigung der damit verbundenen Sensoren 22 und/oder 23, wodurch sich deren Signal ändert. Das von den Sensoren 22 und/oder 23 kontinuierlich abgegebene elektrische Signal, das sich vorzugsweise proportional mit der Neigung ändert, läßt demzufolge Rückschlüsse auf die jeweilige Neigung der Ladeplattform 12 und/oder des oberen Lenkers 15 zu.

Die Sensoren 22 und 23 sind über geeignete elektrische Leitungen oder gegebenenfalls auch drahtlos mit einer nicht gezeigten Schaltung verbunden. Hierbei handelt es sich vorzugsweise um einen Mikroprozessor (CPU). Dieser dient zur Speicherung und Auswertung der elektrischen Signale. Beispielsweise wird mindestens ein elektrisches Signal gespeichert, das vom Sensor 22 und/oder 23 in dem Moment an die Steuerung abgegeben wird, in dem bestimmte Bedienschalter 19 oder 20 betätigt oder losgelassen werden. Erfindungsgemäß wird das oder jedes so abgespeicherte Signal von der Schaltung als Sollwert zum erneuten Anfahren der dem gespeicherten Wert entsprechenden Position der Ladeplattform 12 verwendet. Die Ladeplattform 12 schwenkt dann automatisch in eine Position, die vorher angefahren und dabei gespeichert wurde.

Der Sensor 23 am oberen Lenker 15 kann als Zweipunktsensor ausgebildet sein. Dieser liefert nicht kontinuierlich zur jeweiligen Schwenkposition gehörende Meßwerte; vielmehr nur ein Signal beim Erreichen einer vorherbestimmbaren Position der Ladeplattform 12, insbesondere einer vollständig abgesenkten Position derselben.

Das erfindungsgemäße Verfahren wird im folgenden unter Bezugnahme auf die Figuren näher erläutert.

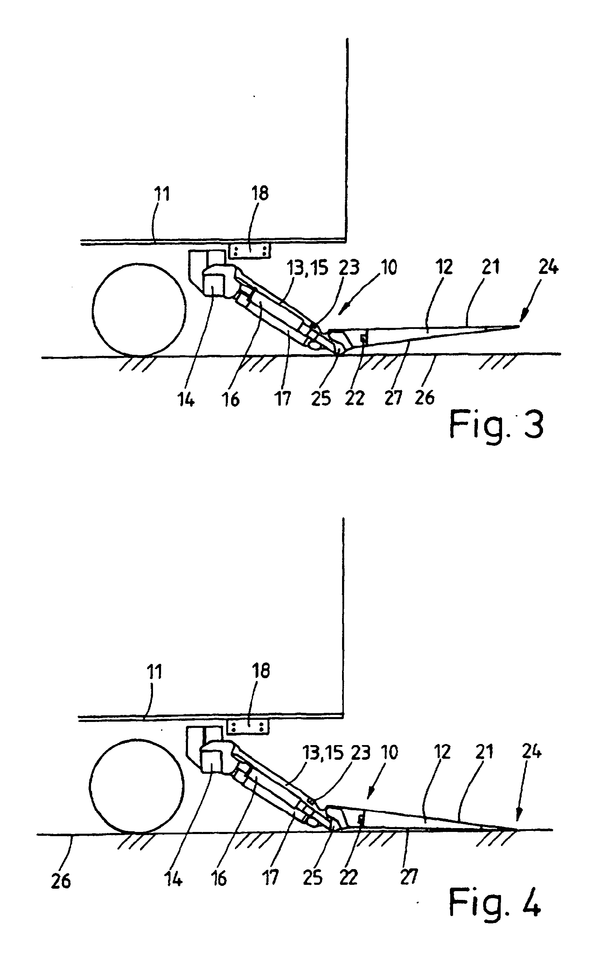

Das Verfahren der Hubladebühne 10 von der in der Fig. 1 gezeigten Ruhestellung in die in der Fig. 4 gezeigte Ladestellung läuft wie folgt ab:

Durch ein Betätigen der beiden Bedienschalter 19 wird die Ladeplattform 12 von der an die Rückseite des Fahrzeugaufbaus 11 angeklappten vertikalen Stellung der Fig. 1 verschwenkt in die Stellung der Fig. 2. Die Bedienschalter 19 sind aus Sicherheitsgründen gleichzeitig zu betätigen. Dort wo andere Sicherungen vorgesehen sind, kann es ausreichen, zum Verschwenken der Ladeplattform 12 nur einen Bedienschalter 19 zu betätigen. Die in der Fig. 2 gezeigte Schwenkposition, bei der sich die Oberseite 21 der Ladeplattform 12 nahezu in der Horizontalen befindet, vorzugsweise eine Hinterkante 24 der Ladeplattform 12 leicht gegenüber der Horizontalen ansteigt, wird von der Bedienungsperson gezielt angefahren, indem sie die beiden Bedienschalter 19 losläßt, wenn die gewünschte Schwenkposition der Ladeplattform 12 erreicht ist (Fig. 2). Der an der Ladeplattform 12 befestigte Sensor 22 gibt zu dem Zeitpunkt, zu dem beide Bedienschalter 19 losgelassen werden oder sich die Neigung der Ladeplattform 12 über einen bestimmten Zeitraum nicht mehr verändert hat, ein Signal an die Steuerung ab. Bei diesem Signal handelt es sich um ein elektrisches Signal, das der eingestellten und in der Fig. 2 gezeigten Neigung der Ladeplattform 12 entspricht. Es handelt sich hierbei um ein neigungsproportionales, elektrisches Signal, das in der Schaltung abgespeichert wird.

Nach dem Aufschwenken der Ladeplattform 12 in die in der Fig. 2 gezeigten Stellung erfolgt ein Absenken der Ladeplattform 12, wozu beide Bedienschalter 20 betätigt werden, und zwar aus Sicherheitsgründen wiederum gleichzeitig. Wenn die Ladeplattform 12 soweit abgesenkt ist, daß ein Teil derselben, insbesondere ein Anlenkpunkt 25 der zum Fahrzeugaufbau 11 weisenden vorderen Seite der Ladeplattform 12 an den Parallelogrammlenkerpaaren 13 und den Druckmittelzylinder 16 und 17, auf dem Boden 26 aufliegt (Fig. 3), liefert der am oberen Lenker 15 angeordnete Sensor 23 ein gleichbleibendes Signal an die Steuerung. Dieses signalisiert der Steuerung, daß der Absenkvorgang beendet ist. Bei weiterhin betätigten Bedienschaltern 20 für das Absenken der Ladeplattform 12 erfolgt nun ein weiteres Verschwenken der Ladeplattform 12, wodurch die schräg zur Oberseite 21 verlaufende Unterseite 27 der Ladeplattform 12 so weit an den Boden 26 angeschwenkt wird, daß die Hinterkante 24 der Ladeplattform 12 am Boden 26 anliegt (Fig. 4). Dieses Verschwenken der Ladeplattform 12 erfolgt automatisch, ohne daß dazu die Bedienungsperson die zum eigentlichen Verschwenken der Ladeplattform 12 dienenden Bedienschalter 19 betätigen muß. Es erfolgt vielmehr durch die Steuerung bei weiterhin betätigten Bedienschaltern 20 für das Absenken der Ladeplattform 12 eine Umschaltung des Antriebs zum Verschwenken der Ladeplattform 12, ohne daß dazu die Bedienungsperson von den weiterhin betätigten Bedienschaltern 20 für das Absenken der Ladeplattform 12 auf die Bedienschalter 19 zum Verschwenken der Ladeplattform 12 wechseln muß. Ausgelöst wird von der Steuerung die Umschaltung vom Senken zum Verschwenken der Ladeplattform 12 durch den Sensor 23, nämlich dann, wenn dieser der Steuerung signalisiert, daß durch ein Anliegen des Anlenkpunkts 25 auf dem Boden 26 ein weiteres Absenken der Ladeplattform 12 nicht mehr möglich ist, indem das vom Sensor 23 an die Schaltung gelieferte Signal über einen bestimmten Zeitraum konstant bleibt.

Das Verfahren der Hubladebühne 10 aus der Ladestellung läuft folgendermaßen ab:

Durch Betätigten der zum Anheben der Ladeplattform 12 dienenden Bedienschaltern 20 wird zunächst die Ladeplattform 12 verschwenkt, also die Hinterkante 24 der Ladeplattform 12 vom Boden 26 abgehoben. Erfindungsgemäß wird dieser Verschwenkvorgang von der Steuerung überwacht und automatisch beendet, und zwar dann, wenn die Ladeplattform 12 eine Schwenkstellung. erreicht hat, die der vor dem Absenken der Ladeplattform 12 eingestellten und abgespeicherten Schwenkposition (Fig. 2) entspricht. Zu diesem Zweck wird die vor dem Absenken der Ladeplattform 12 gespeicherte Schwenkposition herangezogen, indem das dieser Schwenkposition entsprechende, gespeicherte Signal des Sensors 22 von der Steuerung als Sollwert verwendet wird, der während des Hochschwenkens der Ladeplattform 12 von der in der Fig. 4 gezeigten Position in die in der Fig. 3 gezeigte Position ständig verglichen wird mit dabei vom Sensor 22 an die Steuerung gelieferten Ist-Signalen. Decken sich beide Signale, hat die Ladeplattform 12 die Neigung eingenommen, die vor dem Absenken der Ladeplattform 12 vorgegeben worden ist. Demzufolge deckt sich die Neigung der Oberseite 21 der Ladeplattform 12 der Fig. 2 mit der Neigung der Fig. 3. Die Schaltung übt dabei eine Art "Memoryeffekt" aus.

Nachdem das Hochschwenken der Ladeplattform 12 von der in der Fig. 4 gezeigten Stellung in die in der Fig. 3 gezeigte Stellung von der Steuerung automatisch beendet worden ist, leitet die Steuerung bei weiterhin gedrückten Bedienschaltern 20 für das Anheben der Ladeplattform 12 den Hubvorgang ein. Dieser kann von der Bedienungsperson jederzeit durch Loslassen mindestens eines Bedienschalters 20 unterbrochen werden. Bleiben jedoch beide Bedienschalter 20 betätigt, fährt die Ladeplattform 12 hoch in die in der Fig. 2 gezeigte Hub-Endposition, wobei beim Erreichen dieser Hub-Endposition automatisch der Hubantrieb ausgeschaltet wird. Das kann geschehen durch mechanische Endschalter an sich bekannter Art; aber auch durch den Sensor 23 am oberen Lenker 15 eines der Parallelogrammlenkerpaare 13. Dazu liefert der Sensor 23 ein elektrisches Signal an die Schaltung, das der Schaltung bei Erreichen eines bestimmten Signals, bei der der obere Lenker 15 eine entsprechende Schrägstellung eingenommen hat, signalisiert, daß die Ladeplattform ihre Hub-Endposition erreicht hat (Fig. 2).

Ist der Be- oder Entladevorgang beendet, wird durch Betätigung der Bedienschalter 19 die Ladeplattform 12 hochgeschwenkt in die (senkrechte) Ruhestellung (Fig. 1).

Soll hingegen der Lade- oder Entladevorgang fortgesetzt werden, nachdem die Ladeplattform 12 die in der Fig. 2 gezeigte Position erreicht hat, laufen die vorstehend beschriebenen Vorgänge erneut ab, wobei jeweils nur die Bedienschalter 20 zum Anheben und Absenken der Ladeplattform 12 betätigbar sind, und zwar auch zum Anschwenken der Ladeplattform 12 an den Boden 26 von der in der Fig. 3 in die in der Fig. 4 gezeigte Stellung und umgekehrt.

Wenn während eines Be- oder Entladevorgangs, beispielsweise zur Anpassung unterschiedlich schwerer Gegenstände die Neigung der Ladeplattform 12 veränderbar sein soll, geschieht dies durch eine Betätigung beider zur Verschwenkung der Ladeplattform 12 dienenden Bedienschalter 19. Diese werden lediglich so lange betätigt, bis die Ladeplattform 12 ihre gewünschte neue Schrägposition erreicht hat. Der dieser neuen Schwenkpositon entsprechende neue Meßwert wird vom Sensor 22 an die Schaltung übertragen und dort abgespeichert, wobei der frühere (alte) Meßwert überschrieben wird. Im folgenden wird beim Zurückschwenken der Ladeplattform 12 die dem neuen Meßwert entsprechende Schwenkposition (die auch in der Horizontalen liegen kann) angefahren.

Die für die Sensoren 22 und 23 erforderliche Schaltung wird bei einer bevorzugten Weiterbildung der Erfindung herangezogen zu Überwachungsaufgaben und zur Steuerung von Zusatzkomponenten.

In erster Linie dient die Schaltung dazu, Antriebe, insbesondere Elektromotoren oder dergleichen, zum Betrieb der Hubladebühnen ein- und auszuschalten, und zwar gegebenenfalls in Abhängigkeit von Signalen, die von einem oder mehreren Sensoren 22, 23 stammen.

Beispielsweise können Druck- oder Kraftaufnehmer, insbesondere piezoelektrische Fühler oder Dehnungsmeßstreifen, vorgesehen sein, die die Belastung der Hubladebühne 10 ermitteln und ihren Antrieb bei einer Überlastung abschalten. Darüber hinaus ist es denkbar, insbesondere das vom Sensor 22 gelieferte positionsabhängige Signal heranzuziehen, um zu signalisieren, daß die Hubladebühne 10 sich nicht in der Ruhestellung befindet. Dadurch wird vermieden, daß das Fahrzeug bei nicht vollständig geschlossener Hubladebühne 10 in den Straßenverkehr gelangt.

Weiterhin ist es denkbar, Zusatzkomponenten der Hubladebühne, beispielsweise Warnleuchten, von der Schaltung ein- und auszuschalten. Das Einschalten dieser Warnleuchten erfolgt dabei vorzugsweise dann, wenn der Sensor 22 ein bestimmtes Signal an die Steuerung liefert, das der heruntergeklappten Position der Ladeplattform 12 entspricht. Umgekehrt werden beim Hochklappen der Ladeplattform 12 die Warnleuchten automatisch wieder ausgeschaltet.

Schließlich ist es denkbar, eventuelle Stützen zur Abstützung des Fahrzeugs beim Be- und Entladen auszufahren, bevor die Ladeplattform 12 aus der Ruhestellung herausbewegt wird oder bevor sie die in der Fig. 2 gezeigte Position erreicht hat. Ebenso wird von der Steuerung das Einfahren der Stützen ausgelöst, wenn die Ladeplattform 12 ihre Ruhestellung erreicht hat oder aus der in der Fig. 2 gezeigten Stellung in der in die Fig. 1 gezeigte Stellung hochschwenkt.

## Patentansprüche

1. Verfahren zum Steuern einer eine Ladeplattform (12) aufweisenden Hubladebühne (10), wobei die Ladeplattform (12) sowohl verschwenkt als auch abgesenkt und angehoben wird, **dadurch gekennzeichnet, dass** mindestens ein elektrisches Signal, welches wenigstens einer manuell individuell angesteuerten Schwenkposition der Ladeplattform (12) entspricht, gespeichert und diese Schwenkposition bei einem späteren Verschwenken der Ladeplattform (12) wieder selbsttätig angesteuert wird, wobei die Schwenkposition der Ladeplattform (12) vor dem Absenken derselben abgespeichert wird.

2. Verfahren nach Anspruch 1, **dadurch gekennzeichnet. dass** die gespeicherte Schwenkposition beim Zurückschwenken der Ladeplattform (12) selbsttätig angefahren wird.

3. Verfahren nach Anspruch 1 oder 2, **dadurch gekennzeichnet, dass** eine Endposition beim Verschwenken der Ladeplattform (12) aus einer hochgeklappten Ruhestellung in eine abgeklappte Stellung gespeichert wird und nach einem späteren erneuten Verschwenken der Ladeplattform (12) die gespeicherte Stellung beim Zurückschwenken der Ladeplattform (12) automatisch wieder angesteuert wird.

4. Verfahren nach einem oder mehreren der Ansprüche 1 bis 3, **dadurch gekennzeichnet, dass** nach dem vollständigen Absenken der Ladeplattform (12) und einem Verschwenken derselben zur Anpassung an den Verlauf eines Untergrunds, auf den sich die Ladeplattform (12) abstützt, ein Zurückschwenken der Ladeplattform (12) in die zuvor abgespeicherte Schwenkposition erfolgt.

5. Verfahren nach einem oder mehreren der Ansprüche 1 bis 4, **dadurch gekennzeichnet, dass** beim Einleiten des Hubvorgangs vor dem Anheben der Ladeplattform (12) ein Uerschwenken derselben in die abgespeicherte Schwenkposition erfolgt, insbesondere während der Betätigung mindestens eines Bedienschalters (20) zum Heben der Ladeplattform (12).

6. Verfahren nach einem oder mehreren der Ansprüche 1 bis 5, **dadurch gekennzeichnet, dass** mit dem Abspeichern der Schwenkposition der Ladeplattform (12) mindestens eine Zusatzfunktion ausgelöst und/oder gestoppt wird, insbesondere von einer Steuerung zum Abspeichern und Anfahren der abgespeicherten Schwenkposition der Ladeplattform (12) Zusatzfunktionen wahrgenommen, vorzugsweise gesteuert werden.

7. Hubladebühne für Fahrzeuge mit einer Ladeplattform, Lenkern zur Lagerung der Ladeplattform am Fahrzeug und Betätigungsorgan zu verschwenken, anheben und absenken der Ladeplattform, **dadurch gekennzeichnet, dass** mindestens an der Ladeplattform (12) oder einem Lenker (15) wenigstens ein Sensor (22, 23) argeordnet ist zur Abgabe eines sich beim Verschwenken der Ladeplattform (12) stetig ändernden elektrischen Signals, das mit der jeweiligen Schwenkposition der Ladeplattform (12) korrespondiert und dass eine Steuerung vorgesehen ist, die das vom jeweiligen Sensor (22, 23) stammende Signal bei einer bestimmten Schwenkposition der Ladeplattform (12) vor dem Absenken derselben abspeichert und nachfolgend die Ladeplattform (12) wieder in die gespeicherte Schwenkposition bringt.

8. Hubladebühne nach Anspruch 7, **dadurch gekennzeichnet, dass** an mindestens einem Lenker (15) und an der Ladeplattform (12) jeweils wenigstens ein Sensor (22, 23) angeordnet ist.

9. Hubladebühne nach Anspruch 7 oder 8, **dadurch gekennzeichnet, dass** der jeweilige Sensor (22, und/oder 23) als ein Mikrosensor ausgebildet ist.

10. Hubladebühne nach einem oder mehreren der Ansprüche 7 bis 10, **dadurch gekennzeichnet, dass** die Steuerung zum Vergleich des abgespeicherten elektrischen Signals mit einem von einem Sensor (22) stammenden und mit der jeweiligen Schwenkposition der Ladeplattform (12) korrespondierenden Signal ausgebildet ist, wobei dieser Vergleich derart erfolgt, dass bei Übereinstimmung der Signale die Steuerung das Verschwenken der Ladeplattform (12) abschaltet.

## Claims

1. Method of controlling a tail lift (10) having a loading platform (12), the loading platform (12) being both pivoted and lowered and raised, **characterized in that** at least one electrical signal that corresponds to at least one manually individually selected pivoting position of the loading platform (12) is stored and this pivoting position is automatically selected again during subsequent pivoting of the loading platform (12), the pivoting position of the loading platform (12) being stored before the latter is lowered.

2. Method according to Claim 1, **characterized in that** the stored pivoting position is moved to automatically when pivoting the loading platform (12) back.

3. Method according to Claim 1 or 2, **characterized in that** a final position during the pivoting of the loading platform (12) from a folded-up rest position into a folded-down position is stored and, following subsequent renewed pivoting of the loading platform (12), the stored position is selected automatically again when pivoting the loading platform (12) back.

4. Method according to one or more of Claims 1 to 3, **characterized in that** after the loading platform (12) has been lowered completely and after the same has been pivoted in order to match the course of underlying ground, on which the loading platform (12) is supported, the loading platform (12) is pivoted back into the pivoting position previously stored.

5. Method according to one or more of Claims 1 to 4, **characterized in that** when initiating the lifting operation, before the loading platform (12) is lifted, the same is pivoted into the stored pivoting position, in particular during the operation of at least one operating switch (20) for lifting the loading platform (12).

6. Method according to one of more of Claims 1 to 5, **characterized in that** when the pivoting position of the loading platform (12) is stored, at least one additional function is triggered and/or stopped, in particular additional functions are detected, preferably controlled, by a control system for storing and moving to the stored pivoting position of the loading platform (12).

7. Tail lift for vehicles, having a loading platform, links for storing the loading platform on the vehicle and operating element for pivoting, lifting and lowering the loading platform, **characterized in that** at least on the loading platform (12) or a link (15), at least one sensor (22, 23) is arranged to emit an electrical signal which changes continuously during the pivoting of the loading platform (12) and corresponds with the respective pivoting position of the loading platform (12), and **in that** a control system is provided which stores the signal originating from the respective sensor (22, 23) at a specific pivoting position of the loading platform (12) before the latter is lowered and subsequently brings the loading platform (12) into the stored pivoting position again.

8. Tail lift according to Claim 7, **characterized in that** in each case at least one sensor (22, 23) is arranged on at least one link (15) and on the loading platform (12).

9. Tail lift according to Claim 7 or 8, **characterized in that** the respective sensor (22 and/or 23) is designed as a microsensor.

10. Tail lift according to one or more of Claims 7 to 9, **characterized in that** the control system is designed to compare the stored electrical signal with a signal originating from a sensor (22) and corresponding with the respective pivoting position of the loading platform (12), this comparison being carried out in such a way that if the signals agree, the control system switches off the pivoting of the loading platform (12).

## Revendications

1. Procédé pour commander un hayon élévateur (10) présentant une plate-forme de chargement (12), la plate-forme de chargement (12) étant aussi bien basculée qu'abaissée ou élevée, **caractérisé en ce qu'**au moins un signal électrique, qui correspond au moins à une position de basculement de la plate-forme de chargement (12) amorcée manuellement et individuellement, est mise en mémoire et cette position de basculement est réamorcée automatiquement lors d'un basculement ultérieur de la plate-forme de chargement (12), la position de basculement de la plate-forme de chargement (12) étant mise en mémoire avant l'abaissement de celle-ci

2. Procédé selon la revendication 1, **caractérisé en ce que** la position de basculement mise en mémoire est prise automatiquement lors du basculement de retour de la plate-forme de chargement (12).

3. Procédé selon la revendication 1 ou 2, **caractérisé en ce qu'**une position terminale est mise en mémoire lors du basculement de la plate-forme de chargement (12) d'une position de repos relevée dans une position rabattue et, après un basculement ultérieur renouvelé de la plate-forme de chargement (12), la position mise en mémoire est automatiquement réamorcée lors du basculement de retour de la plate-forme de chargement (12).

4. Procédé selon une ou plusieurs des revendications 1 à 3 **caractérisé en ce qu'**après l'abaissement complet de la plate-forme de chargement (12) et un basculement de celle-ci pour l'adaptation à l'allure d'un sol sur lequel la plate-forme de chargement (12) s'appuie, un basculement de retour de la plate-forme de chargement (12) dans la position précédemment mise en mémoire a lieu.

5. Procédé selon une ou plusieurs des revendications 1 à 4, **caractérisé en ce que** lors du déclenchement du processus de levage, avant l'élévation de la plate-forme de chargement (12), un basculement de celle-ci dans la position de basculement mise en mémoire a lieu, en particulier pendant l'actionnement d'au moins un commutateur de commande (20) pour le levage de la plate-forme de chargement (12).

6. Procédé selon une ou plusieurs des revendications 1 à 5, **caractérisé en ce qu'**avec la mise en mémoire de la position de basculement de la plate-forme de chargement (12), au moins une fonction supplémentaire est déclenchée et/ou stoppée, en particulier des fonctions supplémentaires sont assurées, de préférence commandées, par une commande pour mettre en mémoire et prendre la position de basculement de la plate-forme de chargement mise en mémoire.

7. Hayon élévateur pour véhicule comprenant une plate-forme de chargement, des bras oscillants pour monter la plate-forme de chargement sur le véhicule et un organe d'actionnement pour le basculement, l'élévation et l'abaissement de la plate-forme de chargement, **caractérisé en ce qu'**au moins un capteur est disposé au moins sur la plate-forme de chargement (12) ou un bras oscillant (15) pour l'émission d'un signal électrique changeant continuellement lors du basculement de la plate-forme de chargement, lequel correspond à la position de basculement du moment de la plate-forme de chargement (12) et **en ce qu'**une commande est prévue, laquelle met en mémoire le signal provenant du capteur (22, 23) concerné pour une position de basculement déterminée de la plate-forme de chargement (12) et ramène par la suite la plate-forme de chargement (12) dans la position de basculement mise en mémoire.

8. Hayon élévateur selon la revendication 7, **caractérisé en ce qu'**au moins un capteur (22, 23) est chaque fois disposé sur au moins un bras oscillant (15) et sur la plate-forme de chargement (12).

9. Hayon élévateur selon la revendication 7 ou 8, **caractérisé en ce que** le capteur concerné (22 et / ou 23) est configuré comme un microcapteur.

10. Hayon élévateur selon une ou plusieurs des revendications 7 à 9 , **caractérisé en ce que** la commande est configurée pour comparer le signal électrique mis en mémoire avec un signal provenant du capteur (22) et correspondant à la position de basculement du moment de la plate-forme de chargement (12), cette comparaison étant effectuée de telle manière qu'en cas de coïncidence des signaux, la commande arrête le basculement de la plate-forme de chargement (12).
